# EUROPÄISCHE PATENTSCHRIFT

(11) **EP 1 679 205 B1**
(45) Veröffentlichungstag und Bekanntmachung des Hinweises auf die Patenterteilung: **07.01.2009**
(21) Anmeldenummer: 06007917.5
(22) Anmeldetag: 09.02.2004
(51) Int. Cl.: B60D 1/06

(54) **Kupplungsvorrichtung für Zugfahrzeuge**
Coupling device for towing vehicles
Dispositif d'attelage pour véhicule tracteur

(30) Priorität: 12.02.2003 AT 2132003
(43) Veröffentlichungstag der Anmeldung: 12.07.2006
(62) Teilanmeldung aus: 04709163.2
(73) Patentinhaber: Scharmüller, Josef, 4892 Fornach (AT)
(72) Erfinder: Scharmüller, Josef, 4892 Fornach (AT)
(74) Vertreter: Gibler, Ferdinand

(56) Entgegenhaltungen:
- EP-A- 0 640 502
- EP-A2- 1 160 105
- EP-A2- 1 216 856
- US-A1- 2003 006 581
- US-B1- 6 386 572

## Beschreibung

Die Erfindung betrifft eine Kupplungsvorrichtung für Zugfahrzeuge od. dgl. mit einem Rahmenelement, einer Kupplungskugel und einem Niederhalter, wobei die Kupplungskugel mit einem Schwenkelement verbunden ist.

Bekannte derartige Kupplungsvorrichtungen weisen einen schwenkbaren Niederhalter auf, welcher von einer offenen Position in eine geschlossene Position schwenkbar ist. Nachteilig an diesen bekannten Kupplungsvorrichtungen ist, daß beim Kuppelvorgang hohe Spannungsspitzen Im Bereich der Kontaktfläche des Niederhalters mit einer Zugöse auftreten können, wodurch es zu unerwünschten bleibenden Verformungen des Niederhalters im Bereich der Kontaktfläche kommen kann. Diese bleibenden Verformungen bewirken einen erhöhten Verschleiß des Niederhalters und/oder der Zugöse, wodurch das Spiel zwischen der Kupplungsvorrichtung und der Zugöse vergrößert wird und die Stabilität des Zugfahrzeuges und des angekuppelten Fahrzeuges verringert wird. Weiters sind aufgrund der Verformungen kürzere Wartungsintervalle erforderlich.

Ein weiterer Nachteil bekannter Kupplungsvorrichtungen ist, daß für den Kupplungsvorgang und/oder im gekuppelten Zustand hohe Kräfte aufzubringen sind, da die Kontaktfläche des Niederhalters von der Drehachse weiter als der Schließmechanismus und/oder der Sicherungsmechanismus beabstandet ist.

Bekannte Kupplungsvorrichtungen für LKW weisen einen Zapfen auf, der mit einem ringförmigen Kupplungselement einer Zugöse in Eingriff bringbar ist. Bei derartigen Kupplungsvorrichtungen können aufgrund des konstruktionsbedingten Spiels zwischen dem Zapfen und dem Kupplungselement Schwingungen auftreten, wodurch die Stabilität des Zugfahrzeuges und eines Anhängers verringert wird und es zu Unfällen kommen kann.

Die EP 1 216 856 A2 offenbart eine Kupplungsvorrichtung gemäß dem Oberbegriff des Anspruchs 1.

Aus der EP 1 160 105 A2 ist eine Kupplungskugel bekannt, welche einen Sensor zum Detektieren einer aufgesetzten Zugöse umfasst.

Die EP 0 640 502 A1 betrifft eine Kupplung mit einer Kupplungskugel und einem Adapter zum Bereitstellen eines Kupplungsmauls.

Aus der US 2003/0006581 A1 ist eine Kupplung bekannt, bei der eine Zugöse auf eine Kupplungskugel aufgesetzt wird und anschließend ein Niederhalter zur Sicherung der Zugöse verschwenkt wird.

Aus der US 6 386 572 B1 geht ein optisches Sensorsystem zur Erleichterung des Kuppelns hervor.

Aufgabe der Erfindung ist es, eine Kupplungsvorrichtung der eingangs genannten Art anzugeben, bei der die bekannten Nachteile vermieden werden, mit der große Kräfte übertragbar sind, die eine gute Führung der bewegten Teile ermöglicht, die einfach und kompakt herstellbar ist, bei der die bewegten Teile möglichst geschützt anordenbar sind und bei der während des Kuppelvorgangs eine möglichst gleichmäßige Spannungsverteilung in der Kontaktfläche des Niederhalters vorherrscht.

Weitere Aufgabe der Erfindung ist es, eine Kupplungsvorrichtung der eingangs genannten Art anzugeben, die bei LKW verwendet werden kann.

Erfindungsgemäß wird dies dadurch erreicht, dass ein Detektor zum Auslösen des Kuppelvorgangs vorgesehen ist und dass der Detektor zum Detektieren einer Annäherung einer Zugöse in den Bereich zwischen der Kupplungskugel und dem Niederhalter ausgebildet ist.

Dadurch ergibt sich der Vorteil, daß die Kupplungskugel in die Zugöse verschwenkt werden kann, wobei die Position der Zugöse während des Kupplungsvorganges annähernd konstant gehalten werden kann. Weiters kann bei einer Ausführungsform mit Fangmaul, dieses während des Kupplugsvorgangs unbewegt gehalten werden.

Gemäß einer weiteren Ausgestaltung der Erfindung kann vorgesehen sein, dass der Detektor als Betätigungszunge, als Schalter oder als Sensor ausgebildet ist.

In weiterer Ausbildung der Erfindung kann vorgesehen sein, dass der Detektor mit einer Steuereinrichtung verbunden ist, wobei der Kupplungsvorgang, das Schmieren der Kupplungskugel und/oder des Niederhalters, das Einstellen des Niederhalters od. dgl. weitgehend automatisiert und/oder fernbedienbar ausgestaltet werden kann.

Gemäß einer weiteren Ausführungsform der Erfindung kann vorgesehen sein, dass sie ein Fangmaul aufweist.

In Weiterführung der Erfindung kann vorgesehen sein, dass das Fangmaul derart ausgestaltet ist, dass dieses während des Kupplungsvorganges unbewegt gehalten wird.

In weiterer Ausgestaltung der Erfindung kann vorgesehen sein, dass der Niederhalter mit dem Schwenkelement verbunden ist.

Gemäß einer weiteren Ausbildung der Erfindung kann vorgesehen sein, dass der Niederhalter ein Niederhalterelement, insbesondere eine Niederhalterschraube oder dergleichen, umfasst und/oder dass der Niederhalter federbelastet ist, wodurch eine Zugöse mit einer vorgebbaren Mindestkraft gegen die Kupplungskugel im gekuppelten Zustand gedrückt und die Zugöse nahezu spielfrei in der erfindungsgemäßen Kupplungsvorrichtung gehalten werden kann.

Die Erfindung betrifft weiters ein Verfahren zum Kuppeln einer Zugöse mit einer Kupplungsvorrichtung, wobei die Kupplungsvorrichtung ein Rahmenelement, eine Kupplungskugel und einen Niederhalter umfasst.

Aufgabe der Erfindung ist es, ein Verfahren der oben genannten Art anzugeben, bei dem die bekannten Nachteile vermieden werden, bei welchem die bewegten Teile sicher geführt werden, das einen einfachen, schnellen und zuverlässigen Kupplungsvorgang sicherstellt.

Erfindungsgemäß wird dies dadurch erreicht, dass die Annäherung der Zugöse mittels eines Detektors detektiert wird und der Kupplungsvorgang ausgelöst wird und dass während des Kuppelvorganges die Kupplungskugel in die Zugöse verschwenkt wird und die Position der Zugöse im Wesentlichen konstant gehalten wird.

Dadurch ergibt sich der Vorteil, daß die Kupplungskugel in die Zugöse verschwenkt werden kann, wobei die Position der Zugöse während des Kupplungsvorganges annähernd konstant gehalten werden kann. Weiters kann bei einer Ausführungsform mit Fangmaul, dieses während des Kupplugsvorgangs unbewegt gehalten werden.

Die Erfindung wird unter Bezugnahme auf die beigeschlossenen Zeichnungen, in welchen Ausführungsformen dargestellt sind, näher beschrieben. Dabei zeigt:
Fig. 1 eine nicht beanspruchte Ausführungsform einer Kupplungsvorrichtung im Schrägriß mit einer Zugöse;
Fig. 2 die Ansicht von unten auf die Kupplungsvorrichtung nach Fig. 1;
Fig. 3 eine Schrägansicht auf die Kupplungsvorrichtung nach Fig. 1 mit entferntem Fangmaul;
Fig. 4 die Draufsicht auf die Kupplungsvorrichtung nach Fig. 3;
Fig. 5 eine Schrägansicht von hinten auf die Kupplungsvorrichtung nach Fig. 3;
Fig. 6 eine Schrägansicht auf das Rahmenelement der Kupplungsvorrichtung nach Fig. 1;
Fig. 7 eine Schrägansicht auf das Schlittenelement der Kupplungsvorrichtung nach Fig. 1;
Fig. 8 eine Schrägansicht auf das Betätigungselement der Kupplungsvorrichtung nach Fig. 1;
Fig. 9 eine Schrägansicht auf ein Fangmaulteil der Kupplungsvorrichtung nach Fig. 1;
Fig. 10 eine Schrägansicht auf das Rahmenelement einer anderen nicht beanspruchten Ausführungsform der Kupplungsvorrichtung mit Kupplungskugel;
Fig. 11 eine Schrägansicht auf die Kupplungsvorrichtung mit dem Rahmenelement nach Fig. 10;
Fig. 12 die Ansicht von unten auf die Kupplungsvorrichtung nach Fig. 11 mit gekuppelter Zugöse;
Fig. 13 eine Schrägansicht von hinten auf die Kupplungsvorrichtung nach Fig. 12;
Fig. 14 eine Seitenansicht auf eine weitere Ausführungsform einer erfindungsgemäßen Kupplungsvorrichtung, wobei die Kupplungskugel mit einem Schwenkelement verbunden ist;
Fig. 15 eine Schrägansicht auf die Kupplungsvorrichtung nach Fig. 14;
Fig. 16 eine weitere Ausführungsform einer erfindungsgemäßen Kupplungsvorrichtung in Schrägansicht; und
Fig. 17 das Detail A aus Fig. 16.

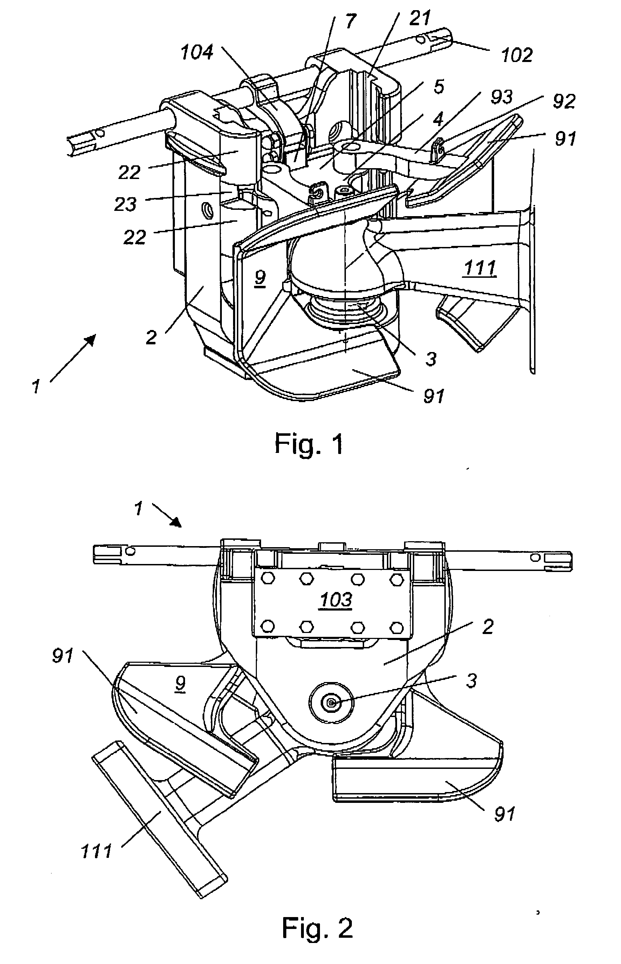

In den Fig. 1 und 2 ist eine Ausführungsform einer erfindungsgemäßen Kupplungsvorrichtung 1 für Zugfahrzeuge od. dgl. mit einem Rahmenelement 2, einer Kupplungskugel 3 und einem Niederhalter 4 dargestellt, wobei das Rahmenelement 2 eine Führung 21 umfaßt und ein Schlittenelement 5 in der Führung 21 verschiebbar gelagert ist.

Durch die Führung 21 kann das Schlittenelement 5 in einer im wesentlichen linearen Bewegung von einer offenen Position in eine gekuppelte Position verschoben werden, wobei, wie in Fig. 1 gezeigt, der Niederhalter 4 mit dem Schlittenelement 5 verbunden sein kann. Bei anderen Ausführungsformen der Kupplungsvorrichtung 1 kann auch die Kupplungskugel 3 mit dem Schlittenelement 5 verbunden sein. Wird bei der Bewegung des Schlittenelementes 5 auch eine zu kuppelnde Zugöse 111 geführt, so kann durch die lineare Bewegung eine besonders zuverlässige Führung der Zugöse 111 erreicht werden. Die Bewegungsrichtung des Schlittenelementes 5 bei der Bewegung von der offenen Position in die geschlossene Position ist dabei vorzugsweise im wesentlichen normal auf die Längsachse der Zugöse 111.

Die in den Fig. 1 und 2 dargestellte Kupplungsvorrichtung 1 weist ein Fangmaul 9 auf, welches geteilt ausgebildet ist und zwei Fangmaulteile 91 umfaßt. In anderen Ausführungsformen können auch mehr als zwei Fangmaulteile 91 vorgesehen sein. Das Fangmaul 9 ist in Bewegungsrichtung des Schlittenelementes 5 geteilt. Bei einem Verschwenken der Zugöse 111 in, der gekuppelten Position kann der maximale Verschwenkwinkel der Zugöse 111 dadurch vergrößert werden, daß jeweils eines der Fangmaulteile 91 verschwenkt wird, während das jeweils andere Fangmaulteil 91 in einer Ruheposition verbleiben kann. Dies kann auf einfache Weise dadurch erreicht werden, daß ein Anschlag od. dgl. zur Begrenzung der Bewegung der Fangmaulteile 91 in Richtung des jeweils anderen Fangmaulteils 91 vorgesehen ist.

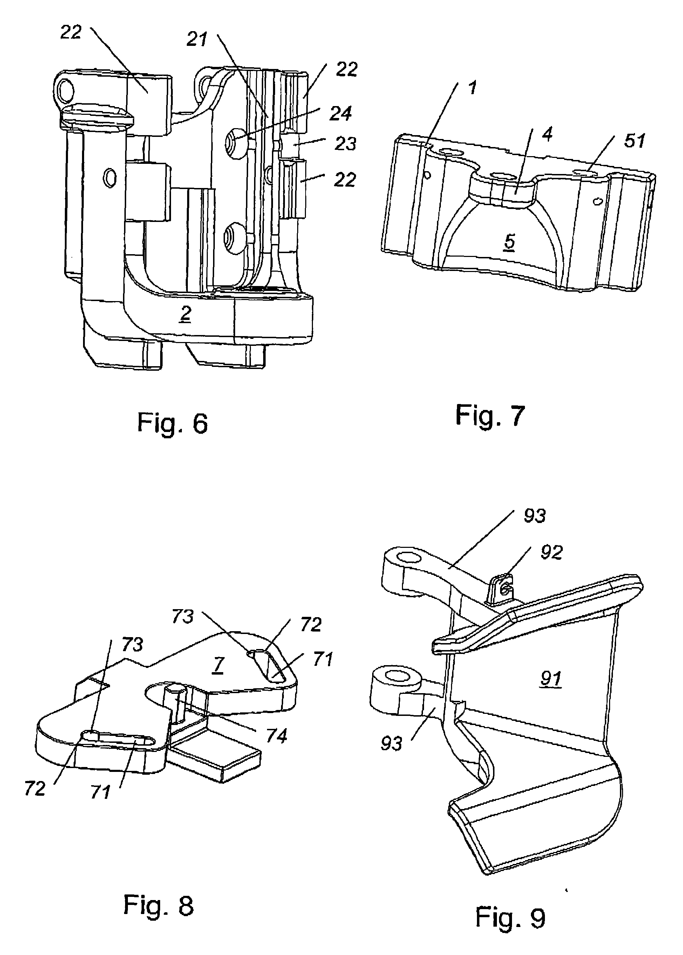

Die Fangnlaulteile 91 weisen weiters jeweils Befestigungsmittel 92 auf, die mittels einem Federelement 94 od. dgl. verbunden werden können. Dadurch kann erreicht werden, daß die Fangmaulteile 91 im unbelasteten Zustand aneinandergrenzend und in einer mittigen Lage angeordnet sind. In Fig. 9 ist eine Schrägansicht auf das Fangmaulteil 91 dargestellt.

Wie in Fig. 1 gezeigt, können die Fangmaulteile 91 mit dem Schlittenelement 5 verbunden sein, wobei das Schlittenelement 5 außermittige Befestigungsmittel 51 zur drehbaren Befestigung der Fangmaulteile 91 aufweist. Im Bereich der Befestigungsmittel 51 treten lokale Spannungsspitzen auf, wobei durch die außermittige Anordnung die Befestigungsmittel 51 in weniger beanspruchten Bereichen des Schlittenelementes 5 angeordnet werden können, wobei insbesondere eine kompakte Ausgestaltung des Schlittenelementes 5 mit einer geringen erforderlichen Einbautiefe erreicht werden kann.

Das Fangmaul 9 dient dazu, bei der Annäherung der Zugöse 111 an die Kupplungsvorrichtung 1 eine Führung der Zugöse 111 in die Lage über der Kupplungskugel 3 sicherzustellen. Dazu ist es erforderlich, daß das Fangmaul 9 in der offenen Position im wesentlichen nicht verschwenkbar ist. Dies kann auf einfache Weise durch die Anformung von mit dem Fangmaul 9 in der offenen Position wirkenden Haltebacken 22 od. dgl. an dem Rahmenelement 2 erreicht werden. Bei einer anderen Ausführungsform können die Haltebacken 22 auch mit dem Zugfahrzeug od. dgl. verbunden sein. In der offenen Position sind die Haltebacken 22 mit Befestigungsarmen 93 der Fangmaulteile 91 in einer Normalebene zur Drehachse der Fangnaulteile 91 angeordnet, wodurch ein Verschwenken der Fangmaulteile 91 unterbunden wird. Im gekuppelten Zustand ist oftmals eine Verschwenkbarkeit der Zugöse 111 gewünscht, welche durch die drehbare Befestigung der Fangmaulteile 91 erreicht werden kann, wobei die Haltebacken 22 in der gekuppelten Position nicht mit den Befestigungsarmen 93 wirken. Dazu kann vorgesehen sein, daß die Haltebacken 22 entsprechende Ausnehmungen 23 aufweisen.

Bei der Bewegung des Schlittenelementes 5 von der gekuppelten Position in die offene Position bei einem aus der unbelasteten Lage verschwenkten Fangmaulteil 91 wird die Bewegung des Befestigungsarmes 93 durch den Haltebacken 22 unterbunden, wodurch es zu einer Beschädigung der Kupplungsvorrichtung kommen kann. Eine solche Beschädigung kann dadurch vermieden werden, daß eine die Bewegung des Schlittenelementes 5 bei vorgebbaren Stellungen des Fangmauls 9 sperrende Sicherungseinhchtung vorgesehen ist, wobei die Bewegung des Schlittenelementes 5 gesperrt wird, wenn die Verschwenkung des Fangmauls 9 einen vorgebbaren Winkel übersteigt.

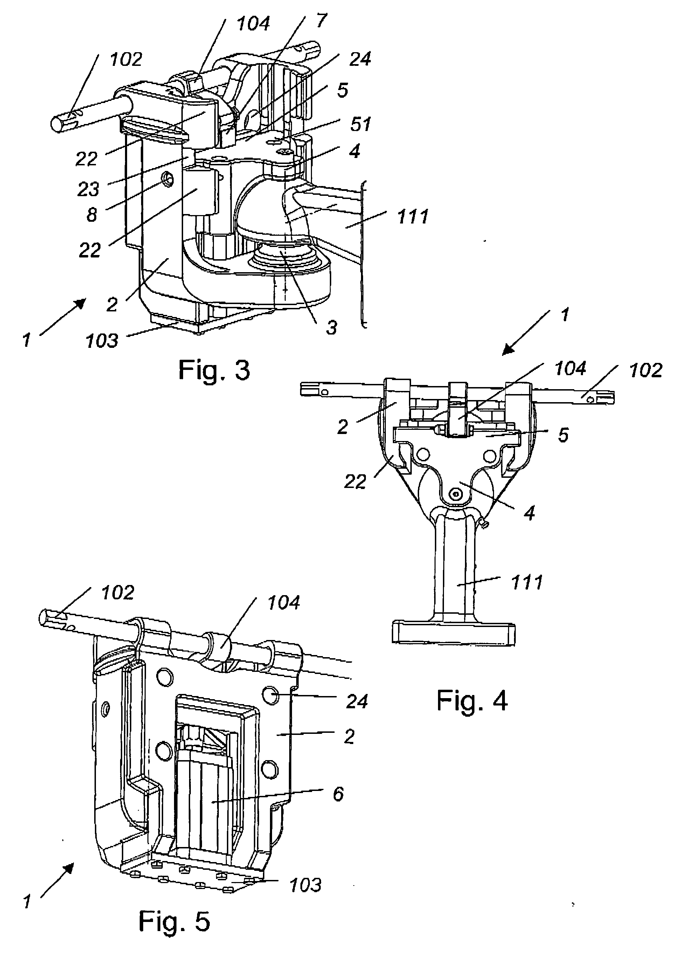

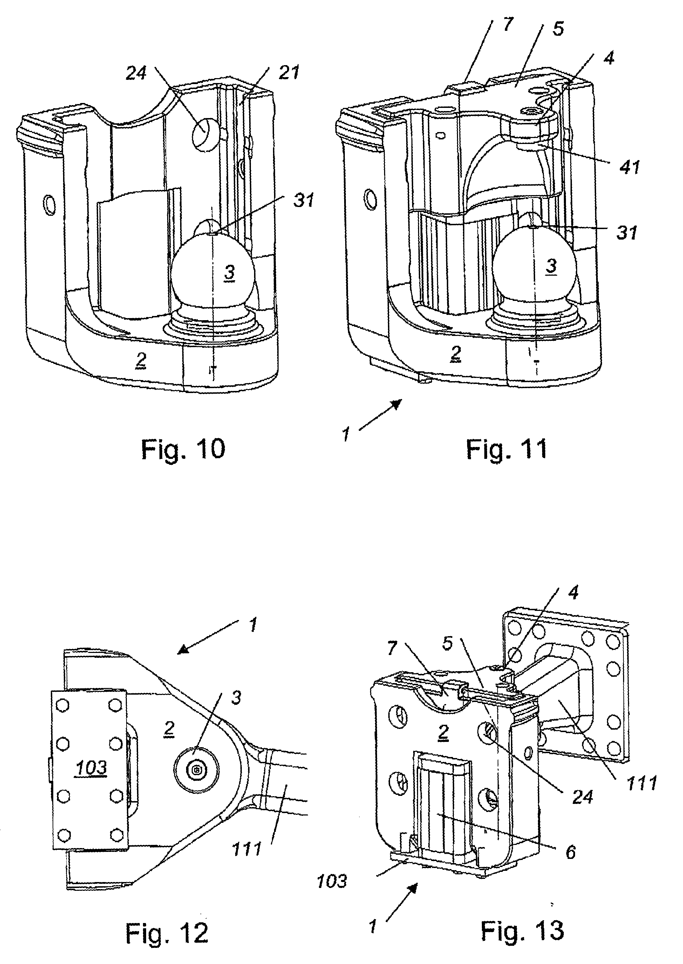

In den Fig. 3 bis 5 ist die Kupplungsvorrichtung 1 ohne Fangmaul 9 dargestellt. In den Fig. 11 bis 13 ist eine weitere Ausführungsform der Kupplungsvorrichtung 1 ohne Fangmaul 9 gezeigt, wobei das Rahmenelement 2 ohne Haltebacken 22 ausgebildet ist. Dadurch kann eine bessere Zugänglichkeit der Kupplungsvorrichtung 1 erreicht werden, sofern eine Führung der Zugöse 111 bei der Annäherung an die Kupplungsvorrichtung 1 nicht erforderlich ist. In Fig. 6 ist eine Ausführungsform des Rahmenelements 2 mit Haltebacken 22 und in Fig. 10 eine Ausführungsform des Rahmenelements 2 ohne Haltebacken 22 dargestellt_

In Fig. 3 ist das Schlitteneleinent 5 in der gekuppelten Position und in Fig. 11 in der offenen Position dargestellt.

Eine schnelle und sichere Betätigung des Schlittenelementes 5 wird erreicht, wenn das Schlittenelement 5 mittels einer mit dem Rahmenelement 2 und/oder dem Zugfahrzeug od. dgl. verbundenen Betätigungsvorrichtung 6 betätigbar ist. Eine Ausführungsform der Betätigungsvorrichtung 6 ist in Fig. 5 dargestellt, wobei insbesondere eine hydraulische und/oder pneumatische Ausbildung der Betätigungsvorrichtung 6 günstig erscheint, wobei die Betätigungsvorrichtung mit an dem Zugfahrzeug üblicherweise vorhandenen hydraulischen und/oder pneumatischen Systemen verbunden werden kann. Dadurch kann die Energie für die Betätigungsvorrichtung 6 einfach und kostengünstig bereitgestellt werden.

Eine zuverlässige Begrenzung des Verschiebeweges des Schlittenelementes 5 in der Führung 21 kann erreicht werden, wenn das Rahmenelement 2 verstellbare Anschläge für das Schlittenelement 5 umfaßt, wobei auch eine Anpassung für unterschiedliche Anwendungen und/oder an abweichende Abmessungen der Bauteile gewährleistet werden kann.

Ein Betätigungselement 7 kann mit der Betätigungsvorrichtung 6 verbunden sein, wobei das Betätigungselement 7 mit dem Schlittenelement 5 in Bewegungsrichtung des Schlittenelementes 5 zumindest teilweise beweglich verbunden ist. In Fig. 8 ist eine Ausführungsform des Betätigungselementes 7 dargestellt, welches mittels eines Zapfens 74 mit der Betätigungsvorrichtung 6 verbindbar ist. Weiters weist das Betätigungselement 7 Führungsmittel 71 auf, welche als Führungsnuten ausgebildet sind. Mit dem Führungsmittel 71 kann wenigstens ein in dem Schlittenelement 5 quer zu dessen Bewegungsrichtung mit diesem verschiebbar gelagertes Verriegelungselement 8 verbunden sein. Das Verriegelungselement 8 ist in Fig. 3 in der Führung des Schlittenelementes 5 dargestellt.

Das Führungsmittel 71 ist schräg zur Bewegungsrichtung des SchlittEnelementes 5 angeordnet. An einem äußeren Ende 72 des Führungsmittels 71 ist ein Sicherungsmittel 73 vorgesehen, welches als Sicherungsnut ausgebildet sein kann. Bei der Bewegung des Schlittenelementes 5 von der offenen Position in die gekuppelte Position kann das Betätigungselement 7 weiter bewegt werden, wenn sich das Schlittenelement 5 in der gekuppelten Position befindet, wobei die Verriegelungselemente 8 betätigt werden und das Schlittenelement 5 mechanisch verriegeln. Beim Bewegen des Schlittenelementes 5 von der gekuppelten Position in die offene Position werden zuerst die Verriegelungselemente 8 mittels des Betätigungselementes 7 bewegt und anschließend das Schlittenelement 5 verschoben. Bei dieser Ausführungsform kann die Bewegung des Schlittenelementes 5 und dessen Verriegelung mittels einer linearen Bewegung der Betätigungsvorrichtung 6 realisiert werden.

Das Schlittenelement 5 kann auch durch eine auf das Schlittenelement 5 und/oder das Betätigungselement 7 in Richtung der gekuppelten Position wirkenden Schließfeder 106 in der gekuppelten Position gehalten werden. Die Schließfeder 106 kann auch zur Verbesserung der Wirkung des Sicherungsmittels 73 vorgesehen sein. Das Sicherungsmittel 73 stellt sicher, daß das Betätigungselement 7 durch eine Kraftwirkung auf die Verriegelungselemente 8 normal auf die Bewegungsrichtung des Schlittenelementes 5 nicht verschoben wird. Durch die Schließfeder 106 kann diese Wirkung des Sicherungsmittels 73 gewährleistet werden.

Um auch bei Ausfall der Betätigungsvorrichtung 6 einen Kuppelvorgang durchführen zu können, kann ein mit dem Schlittenelement 5 und/oder dem Betätigungselement 7 wirkendes manuell betätigbares Betätigungsmittel 102 vorgesehen sein. Das Betätigungsmittel 102 kann dabei als Welle ausgebildet sein, mit der ein Hebelelement 104 od. dgl. verbindbar ist.

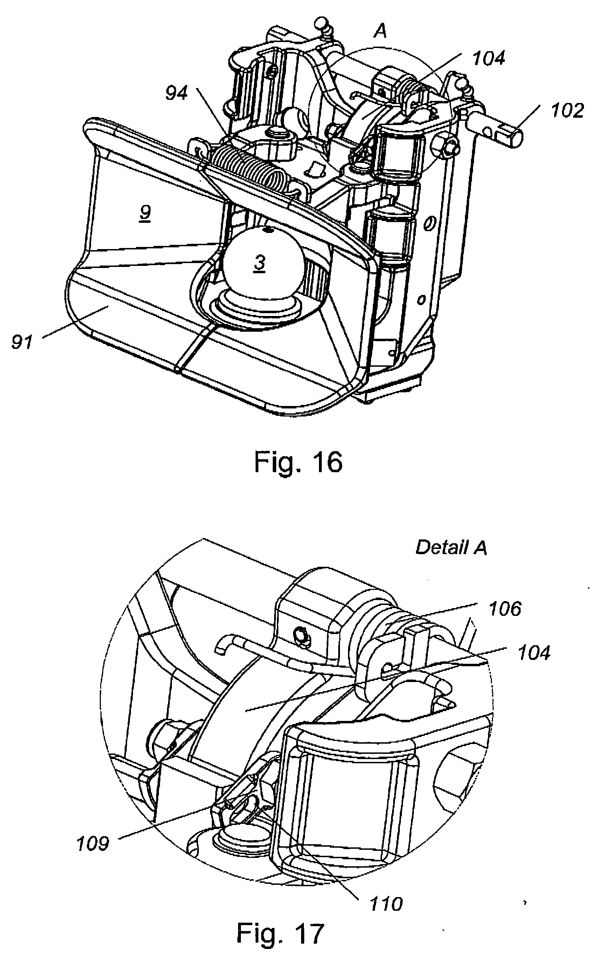

Eine weitere mechanische Sicherung kann auf einfache Weise bereitgestellt werden, wenn das Hebelelement 104 bei geschlossener Kupplungsvorrichtung selbsthemmend ist. Dies kann erreicht werden ,wenn das Hebelelement 106 beim Schließen der Kupplungsvorrichtung über dessen Totpunkt bewegt wird. Diese Lage des Hebelelementes 106, welche in den Fig. 16 und 17 gezeigt ist, kann mittels der Schließfeder 106 weiter abgesichert werden. Bei einem Versagen des Verriegelungselementes 8 stößt das Betätigungselement 7 bei Bewegung in Richtung der offenen Position auf das Hebelelement 104, welches aufgrund der Selbsthemmung eine Bewegung des Betätigungselementes 7 und des Niederhalters 4 verllindert.

Das Hebelelement 104 kann mittels Laschen 109 mit dem Betätigungselement 7 und/oder dem Schlittenelement 5 verbunden sein. Dabei kann die Bewegung des Hebelelementes 104 über seinen Totpunkt dadurch sichergestellt werden, indem die Lasche 109 wenigstens ein Langloch aufweist. Dadurch kann das Hebelelement 104 auch bei stillstehendem Betätigungselement 7 und/oder dem Schlittenelement 5 über den Totpunkt, bei dem die Anlenkpunkte des Hebelelementes 104 und des Betätigungselementes 7 und/oder dem Schlittenelement 5 einen minimalen Abstand aufweisen, bewegt werden.

Zum Öffnen der Kupplungsvorrichtung kann vorgesehen sein, dass das Hebelelement von der Betätigungsvorrichtung 6 über den Totpunkt geschwenkt wird und erst anschließend das Betätigungselement 7 bewegt wird. Dies kann beispielsweise dadurch erreicht werden, dass die Betätigungsvorrichtung mit dem Betätigungselement 7 mittels eines Langlochs verbunden ist.

Bei den dargestellten Ausführungsformen ist das selbsthemmende Hebelelement 104 mit dem Betätigungsmittel 102 verbunden. Bei anderen Ausführungsformen der Kupplungsvorrichtung kann das selbsthemmende Hebelelement 104 auch als eigenes Bauteil vorgesehen sein.

In Fig. 7 ist eine Ausführungsform des Schlittenelementes 5 dargestellt, welches einstückig mit dem Niederhalter 4 verbunden ist, wodurch ein besonders günstiger Kraftverlauf in dem Niederhalter 4 und dem Schlittenelement 5 erreicht werden kann.

Wie in Fig. 11 ersichtlich, kann der Niederhalter 4 ein Niederbalterelement 41, insbesondere eine Niederhalterschraube od. dgl., umfassen. Eine Niederhalterschraube ermöglicht eine einfacbe und schnelle Anpassung des Niederhalters 4 an unterschiedliche Zugösen 111. Bei einer anderen Ausführungsform kann das Niederhalterelement 41 federbelastet sein, wodurch eine selbsttätige Anpassung an unterschiedliche Geometrien der Zugöse 111 gegeben ist. Weiters kann eine Vorspannung des Niederhalterelementes 41 vorgesehen sein, wodurch eine spielfreie Verbindung zwischen der Zugöse 111 und der Kupplungsvorrichtung 1 sichergestellt werden kann.

Ist der Niederhalter 4 mit dem Schlittenelement 5 verbunden, kann die Kupplungskugel 3 mit dem Rabmenelement 2 verschraubt sein. Durch die unmittelbare Verbindung der Kupplungskugel 3 mit dem Rahmenelement 2 können besonders hohe Kräfte von der Kupplungskugel 3 aufgenommen werden, wobei die Verschraubung einen sicheren Halt der Kupplungskugel 3 im Rahmenelement 2 sicherstellt.

Eine lange Lebensdauer der Kupplungsvorrichtung 1 kann erreicht werden, wenn das Niederhalterelement 41 und/oder die Kupplungskugel 3 eine Schmieröffnung aufweist.

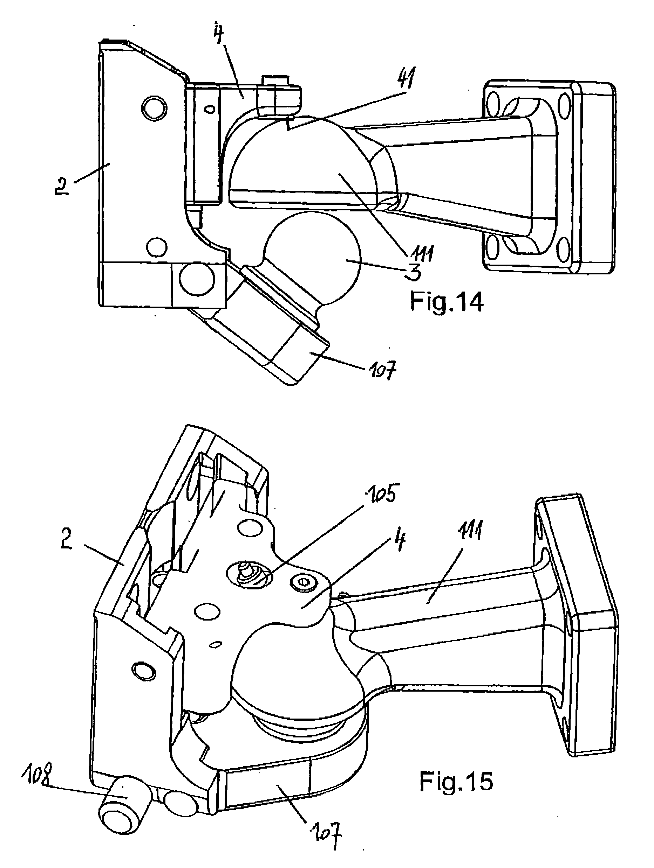

In den Fig. 14 und 15 ist eine Ausführungsform einer erfindungsgemäßen Kupplungsvorrichtung dargestellt, bei der die Kupplungskugel 3 mit einen Schwenkelement 107 verbunden ist. Bei dieser Kupplungsvorrichtung 1 ist bei dem Kuppelvorgang eine Vertikalbewegung der Zugöse 111 nicht erforderlich, wodurch die beim Kuppelvorgang aufgrund einer Verschiebung der Zugöse 111 auftretenden Kräfte gering gehalten werden können. Bei dieser Ausführungsform können insbesondere herkömmliche Fangmäuler 9 od. dgl. einfach verwendet werden können.

Zum Auslösen des Kuppelvorgangs umfasst die Kupplungsvorrichtung 1 einen Detektor od. dgl., mit dem die Annäherung einer Zugöse 111 in den Bereich zwischen der Kupplungskugel 3 und dem Niederhalter 4 detektiert werden kann und gegebenenfalls der Kupplungsvorgang ausgelöst werden kann. Der Detektor kann als Betätigungszunge, als Schalter od. dgl. ausgebildet sein. Bei der Kupplungsvorrichtung 1 in Fig. 15 ist der Detektor als Sensor 105 ausgebildet.

Der Detektor kann insbesondere mit einer Steuereinrichtung verbunden sein, wodurch der Kupplungsvorgang, das Schmieren der Kupplungskugel 3 und/oder des Niederhalters 4, das Einstellen des Niederhalters 4 od. dgl. weitgehend automatisiert und/oder fernbedienbar ausgestaltet werden kann.

Bei wieder anderen Ausführungsformen der Kupplungsvorrichtung 1 kann auch der Niederhalter 4 mit dem Schwenkelement 107 verbunden sein.

Die bei den einzelnen Ausführungsformen der Kupplungsvorrichtung 1 gezeigten Merkmale sind nicht auf diese beschränkt und können insbesondere auch bei den anderen beschriebenen Ausführungsformen der Kupplungsvorrichtung 1 vorgesehen sein.

## Patentansprüche

1. Kupplungsvorrichtung (1) für Zugfahrzeuge od. dg1. mit einem Rahmenelement (2), einer Kupplungskugel (3) und einem Niederhalter (4), wobei die Kupplungskugel (3) mit einem Schwenkelement (107) verbunden ist, wobei zur Ausführung eines Kuppelvorgangs die Kupplungskugel in eine Zugöse verschwenkt werden kann, **dadurch gekennzeichnet, dass** ein Detektor (105) zum Auslösen des Kuppelvorgangs vorgesehen ist und dass der Detektor zum Detektieren einer Annäherung der Zugöse (111) in den Bereich zwischen der Kupplungskugel (3) und dem Niederhalter (4) ausgebildet ist.

2. Kupplungsvorrichtung nach Anspruch 1, **dadurch gekennzeichnet, dass** der Detektor (105) als Betätigungszunge, als Schalter oder als Sensor ausgebildet ist.

3. Kupplungsvorrichtung nach Anspruch 1 oder 2, **dadurch gekennzeichet, dass** der Detektor (105) mit einer Steuereinrichtung verbunden ist, wobei der Kupplungsvorgang, das Schmieren der Kupplungskugel (3) und/oder des Niederhalters (4), das Einstellen des Niederhalters (4) od. dgl. weitgehend automatisiert und/oder fernbedienbar ausgestaltet werden kann.

4. Kupplungsvorrichtung nach einem der Ansprüche 1 bis 3, **dadurch gekennzeichnet, dass** sie ein Fangmaul (9) aufweist.

5. Kupplungsvorrichtung nach Anspruch 4, **dadurch gekennzeichnet, dass** das Fangmaul (9) derart ausgestaltet ist, dass dieses während des Kupplungsvorganges unbewegt gehalten wird.

6. Kupplungsvorrichtung nach einem der Ansprüche 1 bis 5, **dadurch gekennzeichnet, dass** der Niederhalter (4) mit dem Schwenkelement (107) verbunden ist.

7. Kupplungsvorrichtung nach einem der Anspruche 1 bis 6, **dadurch gekennzeichnet, dass** der Niederhalter (4) ein Niederhalterelement (41), insbesondere eine Niederhalterschraube oder dergleichen, umfasst und/oder dass der Niederhalter (4) federbelastet ist.

8. Verfahren zum Kuppeln einer Zugöse (111) mit einer Kupplungsvorrichtung (1), wobei die Kupplungsvorrichtung (1) ein Rahmenelement (2), eine Kupplungskugel (3) und einen Niederhalter (4) umfasst, wobei die Kupplungskugel mit einem Schwenkelement verbunden ist, wobei zur Ausführung eines Kuppelvorgangs die Kupplungskugel in die Zugöse verschwenkt werden kann **dadurch gekennzeichnet, dass** die Annäherung der Zugöse (111) mittels eines Detektors (105) detektiert wird und der Kupplungsvorgang ausgelöst wird und dass während des Kuppelvorganges die Kupplungskugel (3) in die Zugöse (111) verschwenkt wird und die Position der Zugöse (111) annähernd konstant gehalten wird.

## Claims

1. A hitch apparatus (1) for tractors or the like, comprising a frame element (2), a hitch ball (3) and a retainer (4), with the hitch ball (3) being connected with a swiveling element (107), with the hitch ball being swivelable into a drawbar eye for performing a coupling process, **characterized in that** a detector (105) is provided for initiating the coupling process and that the detector is arranged for detecting an approach of the drawbar eye in the region between the hitch ball (3) and the retainer (4).

2. A hitch apparatus according to claim 1, **characterized in that** the detector (105) is arranged as an actuating tongue, a switch or a sensor.

3. A hitch apparatus according to claim 1 or 2, **characterized in that** the detector (105) is connected with a control device, with the coupling process, the lubricating of the hitch ball (3) and/or the retainer (4), the setting of the retainer (4) or the like being arranged in a manner capable of being substantially automated or remote-controlled.

4. A hitch apparatus according to one of the claims 1 to 3, **characterized in that** it comprises a catch mouth (9).

5. A hitch apparatus according to claim 4, **characterized in that** the catch mouth (9) is arranged in such a way that it is immovably held during the coupling process.

6. A hitch apparatus according to one of the claims 1 to 5, **characterized in that** the retainer (4) is connected with the swiveling element (107).

7. A hitch apparatus according to one of the claims 1 to 6, **characterized in that** the retainer (4) is a retainer element (41), especially a retainer screw or the like, and/or that the retainer (4) is spring-loaded.

8. A method for coupling a drawbar eye (111) with a coupling apparatus (1), with the coupling apparatus (1) comprising a frame element (2), a hitch ball (3) and a retainer (4), with the hitch ball being connected with a swiveling element, with the hitch ball being swivelable into the drawbar eye for performing a coupling process, **characterized in that** the approach of the drawbar eye (111) is detected by means of a detector (105) and the coupling process is initiated and that during the coupling process the hitch ball (3) is swiveled into the drawbar eye (111) and the position of the drawbar eye (111) is kept approximately constant.

## Revendications

1. Dispositif d'attelage (1) pour véhicule tracteur ou similaire avec un élément formant cadre (2), une rotule d'attelage (3) et un abaisseur (4), la rotule d'attelage (3) étant reliée à un élément pivotant (107), la rotule d'attelage pouvant être pivotée dans un oeillet d'attelage pour procéder à l'attelage, **caractérisé en ce qu'**un détecteur (105) destiné à déclencher l'opération d'attelage est prévu et que le détecteur destiné à détecter le rapprochement de l'oeillet d'attelage (111) est formé dans la zone située entre la rotule d'attelage (3) et l'abaisseur (4).

2. Dispositif d'attelage selon la revendication 1, **caractérisé en ce que** le détecteur (105) est réalisé sous forme de languette d'actionnement, de commutateur ou de capteur.

3. Dispositif d'attelage selon la revendication 1 ou 2, **caractérisé en ce que** le détecteur (105) est relié à un mécanisme de commande, l'opération d'attelage, le graissage de la rotule d'attelage (3) et/ou de l'abaisseur (4), le réglage de l'abaisseur (4) ou similaire pouvant être conçus de manière à être en grande partie automatisés et/ou commandables à distance.

4. Dispositif d'attelage selon l'une quelconque des revendications 1 à 3, **caractérisé en ce qu'**il comporte une tête d'attelage (9).

5. Dispositif d'attelage selon la revendication 4, **caractérisé en ce que** la tête d'attelage (9) est conçue de manière à être maintenue immobile pendant l'opération d'attelage.

6. Dispositif d'attelage selon l'une quelconque des revendications 1 à 5, **caractérisé en ce que** l'abaisseur (4) est relié à l'élément pivotant (107).

7. Dispositif d'attelage selon l'une quelconque des revendications 1 à 6, **caractérisé en ce que** l'abaisseur (4) comprend un élément abaisseur (41), notamment une vis d'abaissement ou similaire, et/ou que l'abaisseur (4) est sollicité par un ressort.

8. Procédé d'attelage d'un oeillet d'attelage (111) avec un dispositif d'attelage (1), le dispositif d'attelage (1) comprenant un élément formant cadre (2), une rotule d'attelage (3) et un abaisseur (4), la rotule d'attelage étant reliée à un élément pivotant, la rotule d'attelage pouvant être pivotée dans l'oeillet d'attelage pour procéder à l'attelage, **caractérisé en ce que** le rapprochement de l'oeillet d'attelage (111) est détecté moyennant un détecteur (105) et que l'opération d'attelage est déclenchée et que pendant l'opération d'attelage la rotule d'attelage (3) est pivotée dans l'oeillet d'attelage (111) et la position de l'oeillet d'attelage (111) est maintenue approximativement constante.
